# EUROPEAN PATENT SPECIFICATION

(11) **EP 4 449 160 B1**
(45) Date of publication and mention of the grant of the patent: **17.06.2026**
(21) Application number: 22906844.0
(22) Date of filing: 16.11.2022
(51) Int. Cl.: G01S 13/02, G01S 13/66, G01S 13/86, G01S 13/88, G01S 13/87

(54) **SYSTEM AND METHOD FOR RADAR SYSTEM DEFENSE**
SYSTEM UND VERFAHREN ZUR ABWEHR VON RADARSYSTEMEN
SYSTÈME ET PROCÉDÉ DE DÉFENSE À SYSTÈME RADAR

(30) Priority: 19.12.2021 IL 28913321
(43) Date of publication of application: 23.10.2024
(73) Proprietor: Elta Systems Ltd., 7710201 Ashdod (IL)
(72) Inventor: FRENKEL, Noam, 9979700 Karmey Yosef (IL); SHARON, Erez, 9979700 Karmei Yosef (IL); STEINMETZ, Josef, 5442303 Givat Shmuel (IL); ROVINSKY, Jacob, 7174824 Modiin (IL)
(74) Representative: Plasseraud IP
(86) International application number: PCT/IL2022/051223
(87) International publication number: WO 2023/112017

(56) References cited:
- WO-A2-2022/093397
- US-A1- 2017 192 089
- US-A1- 2017 192 089
- US-A1- 2019 221 092
- US-B1- 10 044 465
- MULTERER THOMAS ET AL: "Low-cost jamming system against small drones using a 3D MIMO radar based tracking", 2017 EUROPEAN RADAR CONFERENCE (EURAD), EUROPEAN MICROWAVE ASSOCIATION, 11 October 2017 (2017-10-11), pages 299 - 302, XP033292840, DOI: 10.23919/EURAD.2017.8249206

## Description

### TECHNOLOGICAL FIELD

The present invention is in the field of radar systems and relates to a technique for disruption of unmanned aerial vehicle such as drones.

### BACKGROUND

Radar systems utilize radio frequency (RF) radiation for detection of objects and determining range, direction, and velocity of detected objects.

Phased array antenna systems typically utilize an array of antenna elements, collectively emitting or collecting RF signals. Phased array antenna elements are used in various applications enabling electronic steering and control of RF beams emitted by the antenna system.

US2017192089A1 discloses a deterent for unmanned aerial systems.

US10044465B1 discloses adaptively disrupting unmanned aerial vehicles.

MULTERER Thomas et al, 2017 European radar conference (EURAD), European Microwave Association, discloses a low-cost jamming system against small drones using a 3D MIMO radar based tracking.

### GENERAL DESCRIPTION

Typical radar systems are configured for detection of specific objects within selected range. Parameters of size and typical range of objects to be detected are used in design of the radar systems to increase detection efficiency and signal to noise ratio. This might limit radar system ability to detect objects that are relatively small and within close range as compared to antenna and radar system design. This may place a radar system under threat from relatively small unmanned aerial vehicles (UAV's), capable of reaching close proximity of a radar system. For example, a radar system designed for detection or long-range aerial units (e.g., jet planes and/or surface-to-surface missile (SSM)) may be configured for detection of objects in range of 1-100Km, while being relatively blind to small or slow objects at ranges closer than 1Km. Additionally, the radar system may be a Pulse Doppler radar system, generally configured for operating for large distance scanning ranges.

In this connection the present invention is directed at detecting, and in some embodiments deactivating, various types of threats to the radar system, and specifically threats posed by aerial vehicles at relatively close range (e.g., ranges below 1Km, or below 900m, or below 800m or below 700m, or below 500m, or below 250m, or range of about 100m and below). The present technique is described herein as relative to unmanned aerial vehicles (UAV's) for simplicity, and the term UAV or unmanned aerial vehicles should be understood broadly and may relate to various aerial vehicles that may or may not be operated by human.

To this end, the present invention provides a technique enabling detection of UAV's in selected proximity range from a radar system and may further enable disruption of detected one or more UAV's utilizing beam forming capability of the radar system. the present technique utilizes an additional sensor arrangement comprising one or more sensors configured for providing relatively near range sensing, and corresponding control system.

The sensor arrangement may comprise one or more sensors, arranged is selected arrangement in vicinity of antenna of a primary radar system, and configured for detecting one or more UAV's in a selected range around the radar system. The sensor arrangement may comprise one or more sensors configured for detecting different signal types associated with UAV operation. For example, the sensor arrangement may comprise one or more sensor selected from: one or more acoustic sensors operable for detecting acoustic signals associated with UAV operation; one or more camera units operable for collecting image data of a selected region around the radar system for detection of UAV's; one or more LIDAR systems configured for scanning a selected region around the radar system; and/or a secondary radar unit configured for detection of objects having low form factor within a selected range of the primary radar system. The sensor arrangement may comprise a direction-finding sensor setup, configured to provide detected signals indicative of location of signal origin. This may be provided by arrangement of one or more sensors in different positioned around the radar system, enabling triangulation to determine location of signal source. Additionally, or alternatively, direction-finding setup may be manifested by alignment of sensor directions with respect to a predetermined direction (e.g., determining reference azimuth and elevation) enabling to determine azimuth and elevation-based signal collected by optical imaging unit, lidar and/or secondary radar unit. Generally, the secondary radar unit may be a separate (e.g., passive) radar unit located at selected location with respect to the primary radar system. Additionally, or alternatively, one or more antenna elements of the primary radar system may be operated separately from other antenna elements of the phased array primary radar system, to enable continuous signal collection, acting as secondary radar unit within the primary radar system.

It should be noted that in embodiments using a secondary radar system, such secondary radar system may preferably be operating by frequency modulated continuous wave (FMCW) emission technique, to thereby enable continuous monitoring and avoid blind spots.

Generally, the sensor arrangement may be configured to detect signals typical to UAV's and transmit data on the detected signals to a control system for analysis. The control system may comprise one or more processors and memory circuitry (PMC) and corresponding input/output communication ports. The control system is configured to receive signal data from the sensor arrangement and process the received signal data to determine data about presence, range, and direction of one or more UAV's detected within the selected range. Using data about location (range and direction) of the suspected UAV's, the control system may operate the primary radar system to perform scanning and obtain radar data from the relevant location. Although in general, typical radar scan performed by large radar system might miss small and nearby objects such as UAV's. A guided scan, directed at specific location, may provide additional data on UAV's radar signature, location, speed etc., even if performed by radar system designed for longer range detection.

The system utilizes acoustic sensors, the sensor arrangement utilizes received signal strength (RSS) for determining data on location of signal source. RRS positioning may be used in addition to triangulation provided by arrangement of two or more (generally three or more) sensors around the primary radar system.

Using sensor data obtained by the sensor unit, and in some configuration using additional radar data from the primary radar system, the control unit operates for processing the received sensor data to determine data indicative of UAV typical signature and determine a likelihood measure that the detected signal is caused by a UAV. Processing of the sensor data may be also directed at determining one or more UAV characteristics, e.g., indicative of type of UAV and level of threat that it may pose. and processing of the received signal data to determine physical location of signal source.

Thus, the sensor data and possibly additional radar data indicating detection of potential UAV's are used to determine a likelihood measure indicating likelihood that signal source is a UAV. If the likelihood measure exceeds a selected threshold, the control system may further utilize UAV characteristics to determine a need to deactivate the detected one or more UAV's. The system may also utilize safety parameters comprising one or more parameters indicative of need to deactivate decision. Such parameters may include range of UAV, restricted zone data, selected UAV parameters (such as size, speed, UAV signature data etc.), pre-provided UAV characteristics, etc. The parameters defining need to deactivate may also include governing instructions provided by operator and/or external communication.

When need to deactivate decision is determined, the control system may operate the primary radar system for emitting a focused RF beam toward position of the detected one or more UAV's. The control system may operate the radar system for emitting RF beam directed to be focused onto location where the UAV is detected. The radar system may be directed mechanically and/or using beam steering by phase variations. More specifically, in come configurations, mechanical steering of the radar phased array antenna may direct the antenna toward direction of the UAV. The radar system is operated to emit RF beam having a generally parabolic of phase variations between antenna elements of the phased array, superimposed with selected linear phase variation. The linear phase variation is determined to electronically steer emitted beam toward direction of a detected UAV, and parameters of the parabolic phase variation are determined in accordance with distance to the detected UAV to provide beam focusing on location of the UAV.

Properly focusing the emitted RF beam onto UAV provide high intensity RF radiation impinging on the UAV. Impinging the UAV with high intensity RF signal may affect UAV operation resulting in one of the following scenarios, depending on UAV design: controlled landing of UAV; uncontrolled fall of UAV; UAV retracting to preset location; UAV flying to uncontrolled random direction. Generally, the high intensity RF radiation impinging on the detected UAV may prevent further controlled operation and data transmission to and from the UAV. Further, focused RF beam impinging of a UAV may damage UAV electronic circuits and effectively destroy the UAV rendering it inoperable.

The control system may further operate for monitoring signals associated the detected UAV to thereby determine result of the high intensity RF beam. To this end the control system may receive additional signal data collected by the one or more sensors of the sensor arrangement and process the received signal data for tracking source of the detected signals. Thus, the control system can determine activity status of the detected UAV and determine success score of the deactivation beam. If success score of the deactivation beam is below a selected threshold, the control system may initiate an alert, and may operate for emitting one or more additional deactivation beams to deactivate the detected UAV.

The invention is defined by a system a according to claim 1 and a method according to claim 11.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Fig. 1** schematically illustrating a system according to some embodiments of the present invention;
**Fig. 2** exemplifies operation of a technique for UAV defense according to some embodiments of the present invention;

### DETAILED DESCRIPTION OF EMBODIMENTS

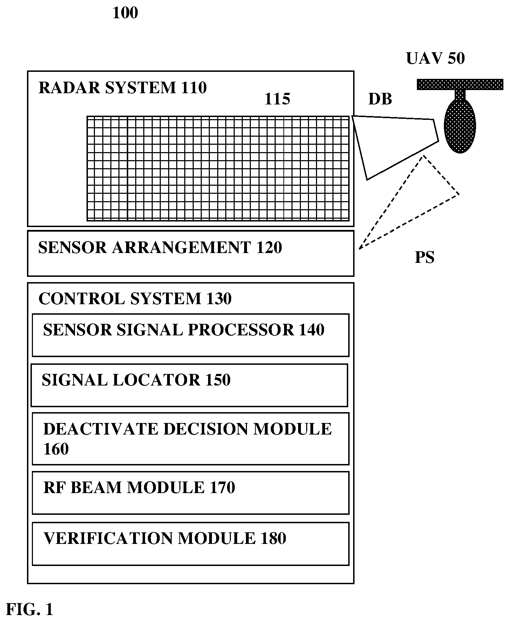

As indicated above. The present invention provides a system and corresponding technique enabling detection and deactivation of UAV, utilizing a primary radar system and an additional sensor arrangement. **Fig. 1** illustrates schematically a system **100** according to some embodiments of the invention. The system **100** includes a primary radar system **110** including at least a phased array antenna system **115.** The radar system **110** may include additional elements associated with radar system including processing unit, user interface, power source, etc. All configured to enable operation of radar system **110** for scanning a selection field of view and detect one or more objects using RF radiation within said field of view. The system also includes a sensor arrangement **120** and control system **130.** The sensor arrangement includes one or more sensors selected from acoustic sensors, one or more imagers, lidar unit, secondary radar unit etc. Control system **130,** may be a separate control unit, or be a part of control unit operating the radar system **110.** In this connection control unit **130** may generally include one or more processors and memory unit and may include one or more hardware or software modules configured for performing selected tasks as described herein below in accordance with computer readable code stored at said memory unit.

The primary radar system **110** may generally be any type of radar system, typically utilizing phased array antenna arrangement. In some embodiments, the primary radar system **110** may be a pulse Doppler radar system, generally configured for scanning of a region in large distance ranges and directed for detecting fast moving objects at large distances. Such pulse doppler radar system typically has blind regions associated with pulsating beam and collection time in which the radar is collecting reflected signals. The Pulse Doppler radar systems may generally have the ability to emit high intensity output beam, such as deactivation beam, enabling deactivation of threats detected by the present technique. In some other configurations, the primary radar system may be any type of primary radar system, including e.g., FMCW radar systems or other radar types.

The sensor arrangement **120** includes one or more sensors units configured and operable for collecting sensing data **PS** from a selected region around the primary radar system **110,** or antenna system **115** of the primary radar system. Sensor arrangement **120** is generally directed at detecting sensing data associated with relatively small objects, and the respective selected region may generally be smaller and associated with certain vicinity of antenna system **115.** Specifically, sensor arrangement **120** is configured for collecting sensing data associated with potential aerial threats to the radar system **100.** Such aerial threat may be directed from aerial vehicle including manned and Unmanned Aerial Vehicles (UAV's) **50** that may pose either physical or intelligence related threats to the primary radar system **110.** The sensor arrangement **120** may include one or more sensors selected from acoustic sensors, optical sensors (e.g., camera/imager units and/or lidar unit), and RF sensors, and may include a combination of the above. The sensors may be arranged in a selected arrangement in vicinity of radar system **100** or its antenna system **115.** The selected arrangement may be determined in accordance with range and sensitivity of radar system **100,** such that sensor arrangement is directed to detect objects at range that is short with respect to minimal detection range of radar system **100,** to thereby complement system detection range.

The control system **130** is configured for operating sensors of the sensor arrangement **120,** and for receiving and processing sensing data to determine whether one or more objects detected by sensor arrangement pose threat to proper operation of radar system **100.** In case control system **130** determined that potential threat exceeds a selected threshold, the control system **130** may provide operation instructions to radar system **100** for operating antenna system **115** thereof to operate for deactivating one or more detected objects to remove the potential threat. As indicated above, control unit **130** may include one or more processors and a memory unit, generally connected to a hardware-based input/output interface. The one or more processors are configured to provide processing necessary for operating the system as described herein. To this end, the one or more processors are configured to execute several functional modules in accordance with computer readable instructions, generally implemented on a non-transitory computer readable memory, associated, or linked to the control system **130.** Such functional modules are thereby described as parts of the control system **130** and may be implemented as software and/or hardware modules, being parts of the one or more processors thereof.

In the exemplary configuration of **Fig. 1****,** control system **130** include a sensor signal processor **140,** signal locator **150,** deactivate decision module **160,** RF beam module **170,** and verification module **170.** These modules exemplify operation actions of control system according to some embodiments of the present invention, where some operational actions may be implemented by various other modules, or certain actions may be combined, being performed by combined software and/or hardware modules as the case may be.

The sensor signal processor **140** is configured for receiving signals collected from sensor arrangement **120** and process the received signal to determine whether the signals indicate existence of one or more aerial vehicles, such as unmanned aerial vehicles (UAV's) in a selected range around the antenna system **115.** The sensor signal processor **140** may be configured for processing the sensing data for determining UAV likelihood based on the collected sensing data. The UAV likelihood measure is generally indicative of a likelihood that the collected sensing data is indicative of one or more UAV's within a region around the radar system **100.** Such UAV likelihood may be determined by processing the collecting signal using artificial intelligence (AI) processing, utilizing collected signals such as such as motor sounds or increased wind turbulence, image data and/or radar signature.

Thus, the sensor signal processor **140** may utilize one or more artificial intelligence (AI) modules, such as pre-trained neural network processing module, or any other machine learning capable module, for processing the collected sensing data and determine UAV likelihood based on one or more signal signatures in the collected data. Additionally, or alternatively, the sensor signal processor **140** may utilize pre-stored data, stored in a respective memory unit, and extract correspondence between UAV signal data and the received sensing data to determine likelihood whether the signals indicate existence of one or more UAV's.

In some configurations the UAV likelihood may be associated with movement pattern of flying objects. More specifically, signal collected by the sensor arrangement **120** may indicate certain objects within a region around the radar system **100.** The UAV likelihood measure may be determined based on movement pattern of the flying object. Where typical UAV flying pattern may include hovering periods, which may be associated with instances of direction changes. Other flying objects such as birds may maintain a direction and change direction gradually. In such cases, UAV likelihood may also relate to data about location of signal source as determined by the signal locator **150.**

The signal locator **150** is configured for receiving and processing the signals collected from sensor arrangement **120,** and data on UAV likelihood (at least initial likelihood in embodiments using movement pattern data) and/or one or more typical signal signature from the sensor signal processor **130,** for determining data on location of one or more detected objects. To this end the signal locator may utilize pre-stored data on physical and spatial arrangement of the sensors used by sensor arrangement **120,** and processing techniques selected in accordance with types and arrangement of the sensors used. For example, the location of the detected objects may be determined directly based on RF or lidar data collected by secondary radar unit and/or lidar unit used in the sensor arrangement. In some additional examples, location of the detected objects may be determined by triangulation of acoustic signal collected by three or more acoustic sensors arranged in predetermined positioned around the radar system. In some further examples, the signal locator may utilize receive signal strength (RSS) technique for determining data on signal source and location of one or more detected objects. Generally, in some typical configurations the signal locator **150** may utilize a combination of two or more location processing techniques for determining location of the detected objects.

Generally, the signal locator **150** may be in communication with the sensor signal processor **140** for updating UAV likelihood bases on location of the detected objects and variation in the location thereof. As indicated above, movement pattern of flying objects may indicate increased or decreased UAV likelihood measure. Accordingly, continuous, or periodic data on location of detected objects may be used to further classify the object with improved or reduced UAV likelihood.

Data on UAV likelihood and location of the one or more detected objects is used for further processing and determining a need to deactivate by the deactivate decision module **160.** The deactivate decision module **160** is configured and operable to receive and process data on the collected signals, UAV likelihood data and location data thereof and determine a need to deactivate score. The need to deactivate score is generally determined in accordance with potential estimated risk, radar system sensitivity (e.g., mission sensitivity), and additional conditions associated with various UAV parameters and potential threat levels pre-stored in memory unit of the control system **120.** The pre-stored conditions may be associated one or more parameters, where UAV likelihood is generally used as a factor. The condition parameters may be selected from parameters of the suspected UAV such as: size, position, speed, and movement pattern. Additional parameters may be associated with selected UAV signature data and movement patterns. Further, for example, in some scenarios where physical threat is of consideration, a suspected UAV of form factor smaller than a selected threshold may be considered as posing low threat, and thus smaller size may lead to lower need to deactivate score, while larger UAV may be considered as posing greater threat even if object has low UAV likelihood. UAV signature data may indicate selected types of UAV's that might raise threat level and need to be deactivated, such as UAV's that are typically used for offensive or intelligence activities. In such cases, an object having suitable signal signature may receive higher need to deactivate score even if having low UAV likelihood measure.

In further examples, the threat level may be increased for objects (suspected UAV's) approaching to relatively close proximity to the antenna system **115,** e.g., at distance below selected threshold, while be considered lower for UAV's detected at larger distance. Further, UAV's moving in certain moving patterns may indicate greater threat level over UAV's having fewer threatening patterns.

The deactivate decision module **160** may thus operate to determine need to deactivate score based on the above parameters, utilizing selected weights for the different parameters in accordance with selected or predetermined threat level conditions provided by operators. In some configurations, the need to deactivate score may be adjusted, e.g., by determining constant need to deactivate score in high threat scenarios.

If the need to deactivate score, for a detected object, is determined to be below a predetermined threshold, i.e., the object need not be deactivated, the control system **120** may continue monitoring the object's movement without disturbing it. If the need to deactivate score is above the threshold, the deactivate decision module transmits a decision to deactivate and the RF beam module **170** may operate to determine deactivate beam parameters and operate the radar system **110** to emit a deactivate beam toward the object.

In this connection, the present technique may generally utilize transmission of focused, high intensity RF beam for deactivating one or more suspected UAV's. However, in some embodiments, the system **100** may utilize one or more beam emitters for emitting a deactivate beam. Such one or more additional beam emitters may include laser array, RF emitter or any other suitable beam emitter. In some typical embodiments, the present technique utilizes focus RF beam emitted by antenna system **115** for deactivating the suspected UAV's.

To this end, the RF beam module **170** received data on location of the suspected UAV's, generally including azimuth, elevation, and range, for determining RF beam parameters, and operates the antenna system **115** of primary radar system **110** for emitting a deactivating beam toward the determined location. The RF beam module **170** may utilize beam stirring and general beam forming techniques for determining operation of the antenna system **115** to emit a selected beam profile to provide focusing of the RF beam at location of the suspected UAV, thereby radiating the suspected UAV with high intensity RF radiation selected to effectively deactivate its operation.

Generally, the antenna system **115** of radar system **110** may be a phased array antenna system. This configuration enables beam steering using phase variations between signal portions transmitted by elements of the antenna array. The present technique may thus utilize beam steering and beam shaping techniques for generating a focused RF beam directed at location of the suspected UAV. Such focused RF beam generated large amplitude electromagnetic fields at estimated location of the suspected UAV, which generally affects UAV operation and/or communication, leading to at least partial deactivation thereof.

Focused high intensity RF beam impinging on UAV may affect UAV operation in several ways depending on UAV design and beam power. The high intensity EM fields may jam UAV communication and/or operation of UAV electronics. This may lead to temporary loss of communication and/or navigation, temporary system failure, and may even lead to burnout of UAV circuits. As a result of the UAV may fail and fall to the ground, operate within limited performance and/or operate one or more safety procedures. Thus, the UAV may experience uncontrolled fall, controlled landing, may retract to a preset location, experience loss of navigation data and fly to random uncontrolled random direction.

Generally, the high intensity RF radiation impinging on the detected UAV may prevent further controlled operation and data transmission to and from the UAV. More specifically, the focused RF beam may limit incoming and outgoing communication from the UAV, preventing it from sending out collected data or received additional instructions. This may be sufficient for limiting intelligence gathering UAV's from data collection and transmission thereof.

After transmission of focused RF beam, the control system operates in accordance with verification module **170.** Verification module operates a repeating discovery sequence, by operating the sensor arrangement **120** for collecting sensing data and processing the sensing data in accordance with data on the detected object already identified as suspected UAV. More specifically, the verification module **170** may operate the sensor arrangement **120** for collecting sensing data and operate the sensor signal processor **140** for processing the sensing data in accordance with signal signature associated with the object toward which RF beam has been directed. The signal locator **150** is further operated in accordance with location to which RF beam has been directed, with certain increased field to compensate for movement of the UAV.

Operation of the verification module **170** is directed at monitoring sensing data with respect to signal signature of one or more objects that have already been detected, and that a deactivation beam has been directed thereto. This operation is provided for determining effects of the deactivation beam and determining status of the object/UAV. The verification module **170** may thus determine a deactivation score indicating level of effect of the deactivation beam on the UAV, and based on the deactivation score, the verification module **170** may determine further processing. For example, monitoring of object signature may indicate that following a deactivation beam, the object has dropped toward the ground without additional maneuvers may lead to high deactivation score, indicating effective deactivation of the UAV. Alternatively, monitoring of the object signature may indicate that object trajectory is unchanged. This indicates a low deactivation score, indicating limited or no effect of the deactivation beam on the object.

A low deactivation score, indicating that a suspected UAV may maintain its threat level, may also suggest that a suspected object might not be a UAV, but a different type of object. Alternatively, low deactivation score may indicate misalignment of the deactivation beam with UAV trajectory, limited effect due to shielding, or other possible reasons. The deactivation score may be based on one or more of the following parameters: correlation between object trajectory before and operation of after deactivation beam, altitude variation of the object, level of variation in signal signature and other parameters as the case may be.

In some configurations, the verification module may operate to compare a deactivation score to a selected or predetermined threshold. Accordingly, a deactivation score being below the threshold may indicated insufficient deactivation, while deactivation score above the threshold indicated sufficient deactivation. Further, in some embodiments, in response to determining a deactivation score below the predetermined threshold, the verification module may initiate an additional deactivation process. To this end, the verification module **170** may operate the sensor signal processor **140,** signal locator **150** and RF beam module **160** to update data on location of the detected object, for which deactivation score is below the threshold, and to generate an additional deactivation beam/ such additional deactivation beam and utilize enhanced beam intensity to improve deactivation effect thereof. The verification module **170** may also generate corresponding alert requesting additional assistance from external systems for deactivation of the UAV.

In some embodiments, the verification module **170** may operate in a follow mode. To this end, the verification module **170** may turn follow mode on, in response to input data from the sensor signal processor **140** indicating that an object is detected having UAV likelihood above a selected or predetermined threshold. While in follow mode, the verification module may collect sensing data from the sensor arrangement and operate the sensor signal processor **140** and signal locator **150** for monitoring location and trajectory of the high UAV likelihood object. The verification module **170** may continue the follow mode upon operation of a deactivation beam, operated by the RF beam module, and determining deactivation status after operation of the deactivation beam. If the deactivation score is low, the verification module **170** may generate a corresponding indication for generating an additional deactivation beam and may generate suitable alert requesting additional assistance from external systems for deactivation of the UAV.

It should be noted that the system **100** according to the present technique may be operated with any type of primary radar system **110,** and specifically with primary radar systems that utilize phase array antenna unit(s). Further, the present technique advantageously provides additional defense against small threats at close proximity (e.g., such as UAVs) for radar systems designed for detection in long distance. Such Primary radar systems **110** may be Pulse Doppler radar systems, that effectively suffer from certain temporal and/or spatial blind spots. Additionally, or alternatively, the primary radar system **110** may also be a FMCW or any other type of radar system capable of emitting focused beam toward a selected location.

Further, in some embodiments, the present technique provides a system for radar defense. The system includes a sensor arrangement and control system as described herein above and is connectable to a selected one or more primary radar systems. Generally, the control system is configured for operating the sensor arrangement, receiving sensing data collected by the sensor arrangement, and for processing the sensing data. The processing provides for determining existence and location of one or more objects in a selected region, determine a UAV likelihood and need to deactivate measures as described herein and generate operational instructions for emission of one or more deactivation beams. The control system operates for transmitting the operational instructions to one or more connected radar systems to thereby operate the associated radar systems for emitting the deactivation beams as described herein.

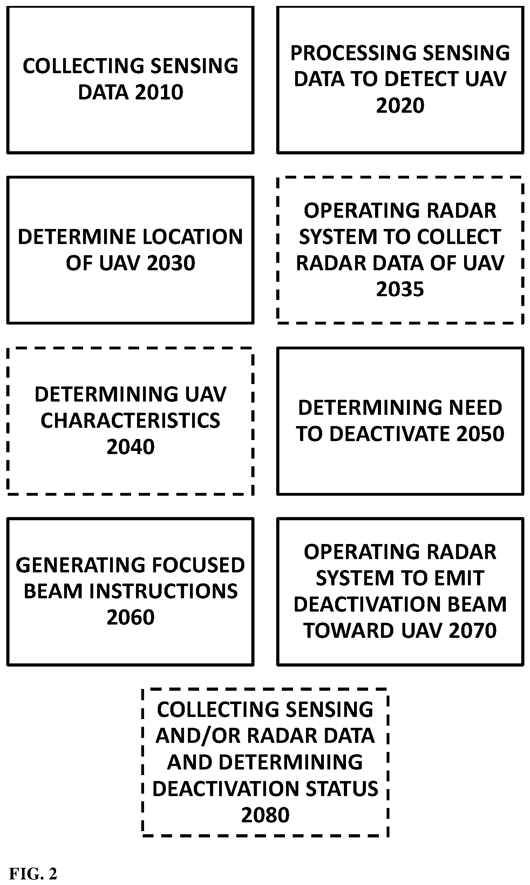

Reference is made to **Fig. 2** exemplifying operation of a method according to some embodiments of the present invention. As indicated above, the present technique generally utilizes a radar system, typically operating with a phase array antenna system, and further utilizes a sensor arrangement and control system associated with the radar system. As also indicated above, the control system generally includes at least one processor and memory circuitry utilizing input/output communication ports and operating in accordance with computer readable instructions operating the at least one processor in accordance with the herein described technique.

Accordingly, as exemplified in **Fig. 2****,** the technique operates for collecting sensing data **2010** from a selected region around location of the radar system. The sensing data is generally generated by the above-described sensor arrangement and may include optical sensing data (e.g., image data and/or lidar scanning data), acoustic sensing data, and/or RF sensing data (e.g., using a secondary radar unit). Processing the sensing data **2020** by the at least one processor for detecting objects in the selected region. The processing is generally directed for detecting objects such as UAVs or other flying vehicles that may pose threat to the radar system. The processing may utilize one or more artificial intelligence processing modules, typically trained on identifying UAV and UAV-type objects from the respective sensing data. As indicated above, the processing may operate to determine a UAV likelihood measure for detected objects, thereby enabling filtering out objects having low UAV likelihood. For objects having high UAV likelihood, the processing may proceed for determining location of UAV **2030.** Location may be determined directly from the sensing data, e.g., utilizing image data, lidar or radar date, and/or be determined utilizing processing of the collected sensing data by triangulation and determining correlations between sensing data collected by one or more sensors located in different positions around the radar system.

In some embodiments, the technique may further include operating the primary radar system **2035** for collecting radar data from a respective location of an object having high UAV likelihood. Generally, the primary radar system may be configured for relatively long-range detection, and have limited detection ability in short range, where UAV may pose threat thereto. However, utilizing a primary, large aperture, radar system may enable obtaining additional information on the detected object, and clarify a need to deactivate.

Additionally, processing of the sensing data, and additional radar signal, obtain either from a secondary radar unit or from the primary radar system when use, may be used for determining UAV characteristics **2040.** Determining UAV characteristics may be used for determining a need to deactivate of the UAV. More specifically, the present technique may utilize decision make modules, and/or operate based on operation parameters provided thereto. Accordingly, UAV characteristics may indicate a threat level of the UAV. For example, UAV's may pose physical threat to the radar system, using weapons carried thereby or by crashing into the antenna system, such UAV may carry explosives. Such physical threat may generally come from relatively large UAV. This is while smaller UAVs may be less threatening, or pose threat associated with intelligence and data collection. Such UAV characteristics may be used for determining a need to deactivate, as well as for providing operating crew appropriate indications for further actions.

Using UAV likelihood data, UAV location, and UAV characteristics when determined, the present technique operated to determine a need to deactivate **2050.** A need to deactivate may be a binary score including yes or no decision, and utilize further scoring scale, including operational decisions from ignoring, passive monitoring, monitoring and alert crew, operating deactivation beam with or without additional monitoring, etc. The need to deactivate decision may be based on the sensing data and above defined parameters and additional pre-stores parameters associated with level of general threat, sensitivity of the radar system, location, and other parameter that may be used.

If a need to deactivate decision includes operation of deactivation beam, the technique includes processing of antenna system location and detected location of the UAV for generating beam instructions **2060.** The deactivation beam is operated as a focused, high intensity RF beam that can be generated by antenna system of the radar system. The use of phased array antenna system enables generation of various beam profiles, where providing linear phase variation enables steering of the beam direction and providing parabolic phase variations enables focusing of the beam to a selected distance. Steering parameters are thus determined based on UAV location, and parabolic parameters are determined based on UAV distance and possibly size. The beam parameters may also include power parameter, generally indicating required RF power need for deactivation of a UAV based on UAV characteristics and distance. Following the beam instructions, the present technique includes operating the primary radar system to emit the deactivation beam toward the UAV **2070.**

As indicated above, the deactivation beam is a focused, high power RF beam. Such beam impinging on a UAV causes high power electromagnetic (EM) fields on the UAV and may cause various effects on the UAV. Such effects may range between jamming communication, disorientating sensors, and may also at times cause burn of electrical circuitry. In response the UAV may be affected in various ways, including e.g., retracting to selected direction, changing course to random direction, and may even fall uncontrollably due to critical malfunction. Generally, the present technique may proceed in monitoring UAV location and movement patterns for determining deactivation status **2080.** Deactivation status may lead to decision to emit additional deactivation beam, send crew to manually deactivate or to collect UAV etc.

In some configurations, the present technique provides a radar defending system. The radar defending system utilizes a sensor arrangement 120 and control system 130 as described herein above. The radar defending system is configured to be used in vicinity of a selected one or more radar system and be connectable thereto, to provide operational instructions to the primary radar system for emitting deactivation beam in accordance with data on location of one or more detected objects.

Thus, the present invention provides a system and technique for monitoring and defending radar systems against close proximity aerial threats such as posed by unmanned aerial vehicles (UAVs) and may utilize RF emitting antenna system of the radar system to provide deactivation means against such UAVs.

## Claims

1. A system (100) comprising a primary radar system (110) comprising one or more phased array antenna systems (115), a sensor arrangement (120), and a control system (130);
said sensor arrangement (120) comprises one or more sensors configured for collecting sensing data indicative of presence and location of one or more unmanned aerial vehicles (UAV's) within a predetermined region, and to provide said sensing data to the control system (130);
the control system (130) comprises at least one processor configured for processing the sensing data, determining a need to deactivate score for the one or more UAV's, and generating operational instructions to the primary radar system (110) for generating a deactivation beam directed toward location of said one or more UAV's, thereby deactivating said one or more UAV's; wherein said sensor arrangement (120) comprises one or more acoustic sensors operable for detecting acoustic signals associated with UAV operation, and wherein the one or more acoustic sensors utilize received signal strength (RSS) for determining data on location of one or more signal sources;
**characterized in that** said operational instructions comprise data on location of one or more detected UAV's and instructions to said primary radar system (110) to emit by the one or more phased array antenna systems (115) of the primary radar system (110) a focused high intensity RF beam directed at said location of the one or more unmanned aerial vehicles to deactivate at least partially said one or more UAV's, thereby providing said deactivation beam.

2. The system of claim 1, wherein said sensor arrangement (120) comprises two or more sensors configured to be positioned in two or more different positions in vicinity of the primary radar system (110), thereby providing sensing data enabling triangulation of one or more UAV's positions.

3. The system of claim 1 or 2, wherein said sensor arrangement (120) comprises one or more sensors selected from optical sensors, a RF sensor, a lidar, a secondary radar unit and a camera operable in visible or infrared wavelength range.

4. The system of any one of claims 1 to 3, wherein the control system (130) comprises a signal processor (140) configured for receiving and processing said sensing data to determine a likelihood measured indicative of probability that source of the sensing data is a UAV, thereby enabling deactivation of detected UAV's.

5. The system of claim 4, wherein said signal processor (140) comprises trained machine learning module, trained for determining one or more UAV's presence within received sensing data.

6. The system of claim 4 or 5, wherein said signal processor (140) operates for determining said likelihood measure in accordance with one or more parameters of signal source selected from: speed, size, moving pattern, physical shape, and acoustic signal.

7. The system of any one of claims 1 to 6, wherein said control system (130) comprises a signal locator module (150) configured and operable for receiving and processing said sensing data and for determining data on location of signal source, generating sensing data associated with one or more UAV's.

8. The system of claim 7, wherein said signal locator module (150) is configured for determining location of said signal source in accordance with direction and distance data included in said sensing data.

9. The system of any one of claims 1 to 8, wherein said need to deactivate score is determined based on said sensing data and pre-stored conditions comprising conditions associated with one or more of: size of UAV, UAV signature, UAV position, and UAV movement pattern.

10. The system of any one of claims 1 to 9, wherein said control system (130) comprises a verification module (180) configured for continuously receiving sensing data from the sensor arrangement (120) and for processing the sensing data to determine activity status of said one or more UAV's to thereby determine success score of the deactivation beam.

11. A method comprising: providing sensing data obtained by sensor arrangement (120) positioned in vicinity of a primary radar system (110); processing the sensing data and determining data indicative of presence and location of one or more unmanned aerial vehicles (UAV's) within a predetermined region; generating operational instructions to said primary radar system (110) to emit a deactivation beam toward located of said one or more UAV's to thereby deactivate said one or more UAV's; wherein said sensor arrangement (120) comprises one or more acoustic sensors operable for detecting acoustic signals associated with UAV operation, and wherein the one or more acoustic sensors utilize received signal strength (RSS) for determining data on location of one or more signal sources; and
**characterized in that** said operational instructions comprises instructions to said primary radar system (110) to emit by the one or more phased array antenna systems of the primary radar system a high intensity RF beam focused to location of said one or more UAV's thereby providing said deactivation beam.

12. The method of claim 11, operable by at least one processor and memory circuitry comprising one or more processors.

13. The method of claim 11 or 12, wherein said sensing data comprises at least one of: acoustic sensing data obtained by one or more acoustic sensors, image data obtained by one or more cameras, RF data obtained by a secondary radar system, and lidar data obtained by a lidar unit.

14. The method of any one of claims 11 to 13, wherein said operational instructions further comprise verifying success of UAV deactivation using a verification module (170) receiving ongoing sensing data from the sensor arrangement (120).

## Patentansprüche

1. System (100), umfassend ein Primärradarsystem (110), welches ein oder mehrere phasengesteuerte Gruppenantennensysteme (115), eine Sensoranordnung (120) und ein Steuersystem (130) umfasst;
wobei die Sensoranordnung (120) einen oder mehrere Sensoren umfasst, welche dazu eingerichtet sind, Erfassungsdaten zu sammeln, welche indikativ für ein Vorhandensein und einen Standort von einem oder mehreren unbemannten Luftfahrzeugen (UAVs) innerhalb einer vorbestimmten Region sind, und die Erfassungsdaten dem Steuersystem (130) bereitzustellen;
wobei das Steuersystem (130) wenigstens einen Prozessor umfasst, welcher dazu eingerichtet ist, die Erfassungsdaten zu verarbeiten, eine Notwendigkeit zur Deaktivierung einer Bewertung für das eine oder die mehreren UAVs zu bestimmen und Betriebsanweisungen an das Primärradarsystem (110) zum Generieren eines Deaktivierungsstrahls zu generieren, welcher in Richtung eines Standorts des einen oder der mehreren UAVs gerichtet ist, wodurch das eine oder die mehreren UAVs deaktiviert werden; wobei die Sensoranordnung (120) einen oder mehrere akustische Sensoren umfasst, welche zum Erfassen von akustischen Signalen betriebsfähig sind, welche mit dem UAV-Betrieb assoziiert sind, und wobei der eine oder die mehreren akustischen Sensoren eine empfangene Signalstärke (RSS) zum Bestimmen von Daten über einen Standort von einer oder mehreren Signalquellen nutzen;
**dadurch gekennzeichnet, dass** die Betriebsanweisungen Daten über einen Standort von einem oder mehreren erfassten UAVs und Anweisungen an das Primärradarsystem (110) umfassen, durch das eine oder die mehreren phasengesteuerten Gruppenantennensysteme (115) des Primärradarsystems (110) einen fokussierten Hochintensitäts-RF-Strahl zu emittieren, welcher in Richtung des Standorts des einen oder der mehreren unbemannten Luftfahrzeuge gerichtet ist, um das eine oder die mehreren UAVs wenigstens teilweise zu deaktivieren, wodurch der Deaktivierungsstrahl bereitgestellt wird.

2. System nach Anspruch 1, wobei die Sensoranordnung (120) zwei oder mehr Sensoren umfasst, welche dazu eingerichtet sind, an zwei oder mehr unterschiedlichen Positionen in einer Nähe des Primärradarsystems (110) positioniert zu sein, wodurch Erfassungsdaten bereitgestellt werden, welche eine Triangulation von Positionen von einem oder mehreren UAVs ermöglichen.

3. System nach Anspruch 1 oder 2, wobei die Sensoranordnung (120) einen oder mehrere Sensoren umfasst, welche ausgewählt sind aus optischen Sensoren, einem RF-Sensor, einem Lidar, einer Sekundärradareinheit und einer Kamera, welche in einem sichtbaren oder infraroten Wellenlängenbereich betriebsfähig ist.

4. System nach einem der Ansprüche 1 bis 3, wobei das Steuersystem (130) einen Signalprozessor (140) umfasst, welcher dazu eingerichtet ist, die Erfassungsdaten zu empfangen und zu verarbeiten, um eine Wahrscheinlichkeit, welche ein gemessenes Indikativ einer Eintrittswahrscheinlichkeit ist, dass eine Quelle der Erfassungsdaten ein UAV ist, zu bestimmen, wodurch eine Deaktivierung von erfassten UAVs ermöglicht wird.

5. System nach Anspruch 4, wobei der Signalprozessor (140) ein trainiertes Modul für maschinelles Lernen umfasst, welches zum Bestimmen eines Vorhandenseins von einem oder mehreren UAVs innerhalb empfangener Erfassungsdaten trainiert ist.

6. System nach Anspruch 4 oder 5, wobei der Signalprozessor (140) zum Bestimmen des Wahrscheinlichkeitsmaßes in Übereinstimmung mit einem oder mehreren Parametern einer Signalquelle betrieben wird, welche ausgewählt sind aus: einer Geschwindigkeit, einer Größe, einem Bewegungsmuster, einer physischen Form und einem akustischen Signal.

7. System nach einem der Ansprüche 1 bis 6, wobei das Steuersystem (130) ein Signallokalisiermodul (150) umfasst, welches dazu eingerichtet und betriebsfähig ist, die Erfassungsdaten zu empfangen und zu verarbeiten und Daten über einen Standort einer Signalquelle zu bestimmen, wodurch Erfassungsdaten generiert werden, welche mit einem oder mehreren UAVs assoziiert sind.

8. System nach Anspruch 7, wobei das Signallokalisiermodul (150) zum Bestimmen eines Standorts einer Signalquelle in Übereinstimmung mit Richtungs- und Abstandsdaten eingerichtet ist, welche in den Erfassungsdaten umfasst sind.

9. System nach einem der Ansprüche 1 bis 8, wobei die Notwendigkeit zur Deaktivierung einer Bewertung basierend auf den Erfassungsdaten und vorgespeicherten Bedingungen bestimmt wird, welche Bedingungen umfassen, welche mit einem oder mehreren der Folgenden assoziiert sind: Größe eines UAV, UAV-Signatur, UAV-Position und UAV-Bewegungsmuster.

10. System nach einem der Ansprüche 1 bis 9, wobei das Steuersystem (130) ein Verifizierungsmodul (180) umfasst, welches dazu eingerichtet ist, kontinuierlich Erfassungsdaten von der Sensoranordnung (120) zu empfangen und die Erfassungsdaten zu verarbeiten, um einen Aktivitätsstatus des einen oder der mehreren UAVs zu bestimmen, um dadurch einen Erfolgswert des Deaktivierungsstrahls zu bestimmen.

11. Verfahren, umfassend: Bereitstellen von Erfassungsdaten, welche durch eine Sensoranordnung (120) erhalten werden, welche in einer Nähe eines Primärradarsystems (110) positioniert ist; Verarbeiten der Erfassungsdaten und Bestimmen von Daten, welche indikativ für ein Vorhandensein und einen Standort von einem oder mehreren unbemannten Luftfahrzeugen (UAVs) innerhalb einer vorbestimmten Region sind; Generieren von Betriebsanweisungen an das Primärradarsystem (110), einen Deaktivierungsstrahl in Richtung eines Standorts des einen oder der mehreren UAVs zu emittieren, um dadurch das eine oder die mehreren UAVs zu deaktivieren; wobei die Sensoranordnung (120) einen oder mehrere akustische Sensoren umfasst, welche zum Erfassen von akustischen Signalen betriebsfähig sind, welche mit einem UAV-Betrieb assoziiert sind, und wobei der eine oder die mehreren akustischen Sensoren eine empfangene Signalstärke (RSS) zum Bestimmen von Daten über einen Standort von einer oder mehreren Signalquellen nutzen; und
**dadurch gekennzeichnet, dass** die Betriebsanweisungen Anweisungen an das Primärradarsystem (110) umfassen, durch das eine oder die mehreren phasengesteuerten Gruppenantennensysteme des Primärradarsystems einen Hochintensitäts-RF-Strahl zu emittieren, welcher auf einen Standort des einen oder der mehreren UAVs fokussiert ist, wodurch der Deaktivierungsstrahl bereitgestellt wird.

12. Verfahren nach Anspruch 11, welches durch wenigstens einen Prozessor und eine Speicherschaltung betriebsfähig ist, welche einen oder mehrere Prozessoren umfasst.

13. Verfahren nach Anspruch 11 oder 12, wobei die Erfassungsdaten wenigstens eines umfassen aus: akustischen Erfassungsdaten, welche durch einen oder mehrere akustische Sensoren erhalten werden, Bilddaten, welche durch eine oder mehrere Kameras erhalten werden, RF-Daten, welche durch ein Sekundärradarsystem erhalten werden, und Lidar-Daten, welche durch eine Lidar-Einheit erhalten werden.

14. Verfahren nach einem der Ansprüche 11 bis 13, wobei die Betriebsanweisungen ferner ein Verifizieren eines Erfolgs einer UAV-Deaktivierung unter Verwendung eines Verifizierungsmoduls (170) umfassen, welches laufende Erfassungsdaten von der Sensoranordnung (120) empfängt.

## Revendications

1. Système (100) comprenant un système radar primaire (110) comprenant un ou plusieurs systèmes d'antenne réseau à commande de phase (115), un agencement de capteur (120) et un système de commande (130) ;
ledit agencement de capteur (120) comprend un ou plusieurs capteurs configurés pour collecter des données de détection indiquant la présence et l'emplacement d'un ou plusieurs véhicules aériens sans pilote (UAV) au sein d'une région prédéterminée, et pour fournir lesdites données de détection au système de commande (130) ;
le système de commande (130) comprend au moins un processeur configuré pour traiter les données de détection, déterminer un score de nécessité de désactivation pour les un ou plusieurs UAV, et générer des instructions opérationnelles pour le système radar primaire (110) afin de générer un faisceau de désactivation dirigé vers l'emplacement desdits un ou plusieurs UAV, désactivant ainsi lesdits un ou plusieurs UAV ; dans lequel ledit agencement de capteur (120) comprend un ou plusieurs capteurs acoustiques opérationnels pour détecter des signaux acoustiques associés au fonctionnement d'UAV, et dans lequel les un ou plusieurs capteurs acoustiques utilisent une intensité de signal reçu (RSS) pour déterminer des données sur l'emplacement d'une ou plusieurs sources de signal ;
**caractérisé en ce que** lesdites instructions opérationnelles comprennent des données sur l'emplacement d'un ou plusieurs UAV détectés et des instructions pour ledit système radar primaire (110) afin d'émettre, par les un ou plusieurs systèmes d'antenne réseau à commande de phase (115) du système radar primaire (110), un faisceau RF focalisé de haute intensité dirigé vers ledit emplacement des un ou plusieurs véhicules aériens sans pilote pour désactiver au moins partiellement lesdits un ou plusieurs UAV, fournissant ainsi ledit faisceau de désactivation.

2. Système selon la revendication 1, dans lequel ledit agencement de capteur (120) comprend deux capteurs ou plus configurés pour être positionnés dans deux positions différentes ou plus à proximité du système radar primaire (110), fournissant ainsi des données de détection permettant une triangulation d'une ou plusieurs positions d'UAV.

3. Système selon la revendication 1 ou 2, dans lequel ledit agencement de capteur (120) comprend un ou plusieurs capteurs choisis parmi des capteurs optiques, un capteur RF, un lidar, une unité radar secondaire et un dispositif de prise de vues opérationnel dans une plage de longueur d'onde visible ou infrarouge.

4. Système selon l'une quelconque des revendications 1 à 3, dans lequel le système de commande (130) comprend un processeur de signal (140) configuré pour recevoir et traiter lesdites données de détection
pour déterminer une possibilité mesurée indiquant la probabilité qu'une source des données de détection soit un UAV, permettant ainsi la désactivation d'UAV détectés.

5. Système selon la revendication 4, dans lequel ledit processeur de signal (140) comprend un module d'apprentissage automatique entraîné, entraîné pour déterminer la présence d'un ou plusieurs UAV dans des données de détection reçues.

6. Système selon la revendication 4 ou 5, dans lequel ledit processeur de signal (140) fonctionne pour déterminer ladite mesure de possibilité conformément à un ou plusieurs paramètres de source de signal sélectionnés parmi : vitesse, taille, schéma de déplacement, forme physique et signal acoustique.

7. Système selon l'une quelconque des revendications 1 à 6, dans lequel ledit système de commande (130) comprend un module localisateur de signal (150) configuré et opérationnel pour recevoir et traiter lesdites données de détection et pour déterminer des données sur un emplacement de source de signal, générant des données de détection associées à un ou plusieurs UAV.

8. Système selon la revendication 7, dans lequel ledit module localisateur de signal (150) est configuré pour déterminer un emplacement de ladite source de signal conformément à des données de direction et de distance comprises dans lesdites données de détection.

9. Système selon l'une quelconque des revendications 1 à 8, dans lequel ledit score de nécessité de désactivation est déterminé sur la base desdites données de détection et de conditions pré-stockées comprenant des conditions associées à un ou plusieurs parmi : taille d'UAV, signature d'UAV, position d'UAV et schéma de mouvement d'UAV.

10. Système selon l'une quelconque des revendications 1 à 9, dans lequel ledit système de commande (130) comprend un module de vérification (180) configuré pour recevoir en continu des données de détection en provenance de l'agencement de capteur (120) et pour traiter les données de détection pour déterminer un état d'activité desdits un ou plusieurs UAV afin de déterminer ainsi un score de réussite du faisceau de désactivation.

11. Procédé comprenant : la fourniture de données de détection obtenues par un agencement de capteur (120) positionné à proximité d'un système radar primaire (110) ; le traitement des données de détection et la détermination de données indiquant la présence et l'emplacement d'un ou plusieurs véhicules aériens sans pilote (UAV) au sein d'une région prédéterminée ; la génération d'instructions opérationnelles pour ledit système radar primaire (110) afin d'émettre un faisceau de désactivation vers l'emplacement desdits un ou plusieurs UAV pour désactiver ainsi lesdits un ou plusieurs UAV ; dans lequel ledit agencement de capteur (120) comprend un ou plusieurs capteurs acoustiques opérationnels pour détecter des signaux acoustiques associés au fonctionnement d'UAV, et dans lequel les un ou plusieurs capteurs acoustiques utilisent une intensité de signal reçu (RSS) pour déterminer des données sur l'emplacement d'une ou plusieurs sources de signal ; et
**caractérisé en ce que** lesdites instructions opérationnelles comprennent des instructions pour ledit système radar primaire (110) afin d'émettre, par les un ou plusieurs systèmes d'antenne réseau à commande de phase du système radar primaire, un faisceau RF de haute intensité focalisé sur l'emplacement desdits un ou plusieurs UAV, fournissant ainsi ledit faisceau de désactivation.

12. Procédé selon la revendication 11, pouvant être mis en œuvre par au moins un processeur et une circuiterie de mémoire comprenant un ou plusieurs processeurs.

13. Procédé selon la revendication 11 ou 12, dans lequel lesdites données de détection comprennent au moins l'une parmi : des données de détection acoustiques obtenues par un ou plusieurs capteurs acoustiques, des données d'image obtenues par un ou plusieurs dispositifs de prise de vues, des données RF obtenues par un système radar secondaire, et des données lidar obtenues par une unité lidar.

14. Procédé selon l'une quelconque des revendications 11 à 13, dans lequel lesdites instructions opérationnelles comprennent en outre la vérification de la réussite d'une désactivation d'UAV à l'aide d'un module de vérification (170) recevant des données de détection en cours provenant de l'agencement de capteur (120).
